# EUROPÄISCHE PATENTSCHRIFT

(11) **EP 0 354 350 B1**
(45) Veröffentlichungstag und Bekanntmachung des Hinweises auf die Patenterteilung: **10.11.1993**
(21) Anmeldenummer: 89112423.2
(22) Anmeldetag: 07.07.1989
(51) Int. Cl.: B23K 7/00

(54) **Verfahren zum autogenen Brennschneiden mit Flüssigsauerstoff**
Process for autogenous cutting with liquid oxygen
Procédé de coupage autogène avec de l'oxygène liquide

(30) Priorität: 12.08.1988 DE 3827417
(43) Veröffentlichungstag der Anmeldung: 14.02.1990
(73) Patentinhaber: GeGa Lotz GmbH, 65719 Hofheim-Wallau (DE)
(72) Erfinder: Grohmann, Paul, A-2344 Maria-Enzersdorf (AT)

(56) Entgegenhaltungen:
- EP-A- 0 225 481
- BE-A- 528 923
- DE-A- 1 752 904
- US-A- 2 205 499

## Beschreibung

Die Erfindung betrifft ein Verfahren nach dem Oberbegriff des Anspruches 1.

Beim Schneiden mit einem Hochdruck-Flüssigsauerstoffstrahl, wie es z. B. aus der DE-OS 35 43 657 bekannt ist, wird der vom Tank im Siedezustand befindende Sauerstoff durch eine Hochdrucksauerstoffpumpe z. B. auf 500 bar Druck gebracht und anschließend durch eine Flüssigstrahlschneiddüse der Schneidstelle zugeführt. Aufgabe der vorliegenden Erfindung ist es bei einem derartigen Verfahren die Schnittgeschwindigkeit und die Schnittqualität zu erhöhen.

Diese Aufgabe wird durch die kombinierten Merkmale des Anspruches 1 gelöst. Vorteilhafte Weiterbildungen der Erfindung sind in den Unteransprüchen angegeben.

Durch die vorgesehene Unterkühlung des tiefkalten Hochdruck-Flüssigsauerstoffstrahles wird vorteilhaft errreicht, daß der aus der Düse austretende Hochdruck-Flüssigsauerstoffstrahl dünn und scharf gebündelt ist sowie kaum divergiert und erst in einer relativ großen Entfernung vom Düsenaustritt zu expandieren beginnt. Darüber hinaus bewirkt der unterkühlte Strahl einen hohen Impuls der in Verbindung mit der genannten Strahlform Schnittgeschwindigkeiten und Schnittqualitäten gewährleistet, die ca. 30 - 80 % höher sind, als bei einem Verfahren ohne Strahlunterkühlung.

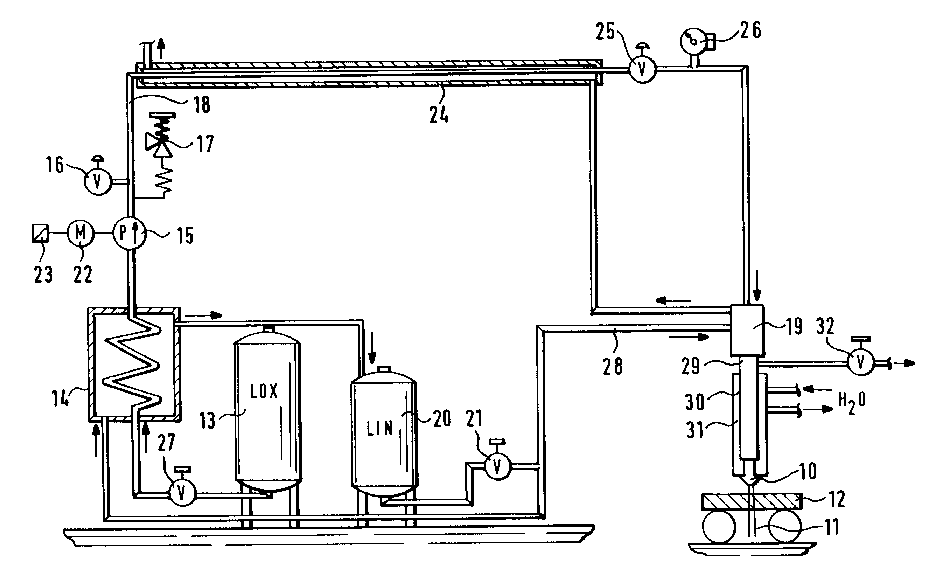

Eine Vorrichtung zur Durchführung des erfindungsgemäßen Verfahrens ist in der Zeichnung dargestellt und wird im folgenden näher beschrieben.

Dargestellt ist eine Flüssigstrahlschneiddüse 10, aus der ein Strahl 11 flüssigen Sauerstoffs mit hoher Geschwindigkeit austritt und auf ein zu schneidendes Werkstück 12 auftrifft. Die Zufuhr des flüssigen Sauerstoffs erfolgt aus einer als isolierter Speicher 13 ausgebildeten Versorgungseinrichtung, der ein Zulaufventil 27, ein Kühler 14 sowie eine Hochdruckpumpe 15 nachgeschaltet sind. Die Hochdruckpumpe 15 ist ausgangsseitig unter Zwischenschaltung von einem Flüssigsauerstoffhochdruck-Entlastungsventil 16 sowie einer Berstscherbe 17 mit einer isolierten Hochdruckleitung 18 verbunden, die an einem Brenner 19 angeschlossen ist, in dem die Schneiddüse 10 befestigt ist.

Der Kühler 14 ist mit einer als isolierter Speicher 20 ausgebildeten Versorgungseinrichtung für das Kühlmittel, flüssiger Stickstoff, verbunden. Das Stickstoffzulaufventil ist mit 21 bezeichnet. Durch den flüssigen Stickstoff, der einen um 13 K niedrigeren Siedepunkt bei 1013 mbar als Sauerstoff hat, wird der flüssige Sauerstoff derart unterkühlt, daß er aus der Flüssigstrahlschneiddüse 10 mit einer Temperatur austritt, die einige K, z. B. im Bereich von 1 K bis 10 K unter der Siedetemperatur des flüssigen Sauerstoffs bei 1013 mbar liegt. Der flüssige Sauerstoff kann mit der Pumpe 15, je nach Düsendurchmesser auf 500 bar Druck gebracht werden. Die dafür benötigte Leistung bringt ein Drehstrommotor 22 mit einer Nenndrehzahl von 1470 U/min bei 50 Hz, auf. Die Übertragung der Leistung erfolgt mittels Riemenscheiben und 5 Keilriemen, bei einer Übersetzung von 280:125 mm und einem Faktor 2,24 ins Langsame. Über einen Frequenzumformer 23 kann eine Frequenz von 0 bis 75 Hz eingestellt werden, das entspricht 0 bis 985 U/min an der Pumpenwelle.

Die Sauerstoffzuleitung erfolgt vom Speicher 13 über Kupferrohre zur Hochdruckpumpe 15 und danach in der Hochdruckleitung 18 aus Edelstahl zum Brenner 19. Die Hochdruckleitung 18 ist von einem Edelstahlrohr 24 ummantelt. Im Gegenstromprinzip wird flüssiger Stickstoff zur Kühlung der flüssigen Sauerstoff führenden Hochdruckleitung 18 durch den Kühlmantel geleitet, wobei der Flüssig-Stickstoff ebenfalls aus dem Speicher 20 entnommen wird und zwar über die Leitung 28. In der Hochdruckleitung 18 sind ferner ein Flüssigsauerstoffhochdruckventil 25 sowie ein Kontaktmanometer m. Min.-Max.-Kontakt 26 vorgesehen. Wie veranschaulicht wird die Flüssig-Stickstoff-Leitung 28 über den Brenner 19 geführt, so daß im Brenner 19 die Flüssigsauerstoffbohrung von einem Kühlmantel 29 aus flüssigem Stickstoff umgeben ist. Dieser Kühlmantel ist seinerseits von einer Isolierung 30 und einer Wasserkühlung 31 umfaßt. Das am Brenner 19 angeschlossene Stickstoffabblasventil ist mit 32 gekennzeichnet und dient dazu gasförmigen Stickstoff, der durch die Brennerkühlung entstanden ist, abzuführen. Durch die vorgesehenen Kühleinrichtungen (Kühler 14 sowie Kühlung der Hochdruckleitung 18 und des Brenners 19) wird vorteilhaft erreicht, daß auch die durch Reibung und Kompressionsarbeit entstehende Wärme abgeführt und der flüssige Sauerstoffstrahl unterkühlt aus der Düse austritt und damit die oben beschriebene Vorteile erreicht werden. Eine besonders vorteilhafte, raumsparende Anordnung wird erreicht, wenn Kühler 14, Hochdruckpumpe 15 und Brenner 19 auf einem gemeinsamen Rahmen angeordnet sind und der Rahmen vorzugsweise höhenverstellbar an einem verschiebbaren Querwagen einer Portalschneidmaschine befestigt ist. Die Zuführung von flüssigem Sauerstoff und flüssigem Stickstoff erfolgt bevorzugt über bewegliche vakuumisolierte Metall-Wellrohrschläuche.

## Patentansprüche

1. Verfahren zum autogenen Brennschneiden, bei dem Sauerstoff in flüssiger Form auf einen hohen Druck gebracht und durch eine Flüssigstrahlschneiddüse der Schneidstelle zugeführt wird,
dadurch gekennzeichnet, daß
der tiefkalte Flüssigsauerstoffstrahl unterkühlt aus der Düse (10) austritt und dabei eine Temperatur aufweist, die unter der Siedetemperatur des Sauerstoffs bei Umgebungsdruck liegt.

2. Verfahren nach Anspruch 1,
dadurch gekennzeichnet, daß
die Austrittemperatur des Flüssigsauerstoffstrahls im Bereich von 1 K und 10 K unter der Siedetemperatur des Sauerstoffs bei Umgebungsdruck liegt.

3. Verfahren nach Anspruch 1 oder 2,
dadurch gekennzeichnet, daß
der Flüssigsauerstoff mittels einer Hochdruckpumpe auf einen Druck zwischen 50 und 500, vorzugsweise 150 bis 400 bar gebracht wird.

4. Verfahren nach einem der Ansprüche 1 bis 3,
dadurch gekennzeichnet, daß
der Flüssigsauerstoff bevor er auf einen hohen Druck gebracht wird, mit einem Kühlmittel, vorzugsweise flüssigem Stickstoff, unterkühlt wird.

5. Verfahren nach Anspruch 4,
dadurch gekennzeichnet, daß
die Unterkühlung des Flüssigsauerstoffs in einem vor der Hochdruckpumpe angeordneten Vorkühler erfolgt.

6. Vorrichtung zur Durchführung des Verfahrens nach einem der Ansprüche 1 bis 5, mit einer Versorgungseinrichtung für flüssigen Sauerstoff, der eine Hochdruckpumpe nachgeschaltet ist, die ausgangsseitig mit einer Flüssigstrahlschneiddüse verbunden ist,
dadurch gekennzeichnet, daß
der Versorgungseinrichtung (13) ein Kühler (14) zum Unterkühlen des flüssigen Sauerstoffs sowie eine Hochdruckpumpe (15) nachgeschaltet sind und, daß der Kühler (14) mit einer Versorgungseinrichtung (20) für ein Kühlmittel, vorzugweise Flüssigstickstoff-Versorgungseinrichtung, in Verbindung steht.

7. Vorrichtung nach Anspruch 6,
dadurch gekennzeichnet, daß
die Hochdruckleitung (18) zwischen der Hochdruckpumpe (15) und der Düse (10) mit einem Kühlmantel (24), vorzugsweise aus flüssigem Stickstoff, versehen ist.

8. Vorrichtung nach Anspruch 6 oder 7,
dadurch gekennzeichnet, daß
die Düse (10) in einem Brenner (19) angeordnet ist, dessen Flüssigsauerstoffbohrung von einem Kühlmantel (29) aus flüssigem Stickstoff umgeben ist, der seinerseits von einer Isolierung (30) und einer Wasserkühlung (31) umfaßt ist.

9. Vorrichtung nach einer der Ansprüche 6 bis 8,
dadurch gekennzeichnet, daß
Kühler (14), Hochdruckpumpe (15) und Brenner (19) auf einem gemeinsamen Rahmen angeordnet sind, der vorzugsweise höhenverstellbar am verschiebbaren Querwagen einer Portalschneidmaschine befestigt ist.

## Claims

1. Method of autogenous flame cutting, in which oxygen in liquid form is brought to a high pressure and is fed to the cutting point through a liquid-jet cutting nozzle, characterised in that the low-temperature liquid oxygen jet emerges from the nozzle (10) in supercooled form and under these conditions is at a temperature which is below the boiling point of the oxygen at ambient pressure.

2. Method according to Claim 1, characterised in that the exit temperature of the liquid oxygen jet is in the range from 1 K to 10 K below the boiling point of oxygen at ambient pressure.

3. Method according to Claim 1 or 2, characterised in that the liquid oxygen is brought to a pressure of between 50 and 500, preferably 150 to 400, bar by means of a high-pressure pump.

4. Method according to one of Claims 1 to 3, characterised in that, before it is brought to a high pressure, the liquid oxygen is supercooled with a coolant, preferably liquid nitrogen.

5. Method according to Claim 4, characterised in that the liquid oxygen is supercooled in a precooler disposed upstream of the high-pressure pump.

6. Apparatus for carrying out the method according to one of Claims 1 to 5, comprising a supply apparatus for liquid oxygen which is connected downstream of a high-pressure pump whose outlet side is connected to a liquid-jet cutting nozzle, characterised in that a cooler (14) for supercooling the liquid oxygen and a high-pressure pump (15) are connected downstream of the supply apparatus (13) and in that the cooler (14) is in communication with a supply apparatus (20) for a coolant, preferably a liquid nitrogen supply apparatus.

7. Apparatus according to Claim 6, characterised in that the high-pressure line (18) between the high-pressure pump (15) and the nozzle (10) is provided with a cooling jacket (24), preferably of liquid nitrogen.

8. Apparatus according to Claim 6 or 7, characterised in that the nozzle (10) is disposed in a burner (19) whose liquid oxygen bore is surrounded by a cooling jacket (29) of liquid nitrogen which is in turn enclosed by an insulation (30) and a water cooling system (31).

9. Apparatus according to one of Claims 6 to 8, characterised in that the cooler (14), high-pressure pump (15) and burner (19) are disposed on a common frame which is preferably mounted so as to be adjustable in height on the displaceable transverse trolley of a gantry cutting machine.

## Revendications

1. Procédé de coupe autogène selon lequel l'oxygène à l'état liquide est mis à haute pression et alimente la buse de coupage par jet de liquide du point de coupage, procédé caractérisé en ce que le jet d'oxygène liquide à très basse température sort de la buse (10) à l'état sous-refroidi et possède alors une température inférieure à la température d'ébullition de l'oxygène à la pression ambiante.

2. Procédé selon la revendication 1, caractérisé en ce que la température de sortie du jet d'oxygène liquide se situe entre 1K et 10K sous la température d'ébullition de l'oxygène à la pression ambiante.

3. Procédé selon la revendication 1 ou 2, caractérisé en ce que l'oxygène liquide est fourni par une pompe à haute pression à une pression comprise entre 50 et 500 et de préférence 150 à 400 bars.

4. Procédé selon l'une des revendications 1 à 3, caractérisé en ce que l'oxygène liquide est sous-refroidi avec un agent de refroidissement, de préférence de l'azote liquéfié, avant d'être mis à pression élevée.

5. Procédé selon la revendication 4, caractérisé en ce que le sous-refroidissement de l'oxygène liquide se fait dans un échangeur de refroidissement en amont de la pompe haute pression.

6. Dispositif pour la mise en oeuvre du procédé selon l'une des revendications 1 à 5, comportant une installation d'alimentation en oxygène liquide suivie par une pompe à haute pression dont le côté d'entrée est relié à la buse de découpage par jet liquide,
dispositif caractérisé en ce que la conduite d'alimentation (13) comporte un échangeur (14) pour sous-refroidir l'oxygène liquide ainsi qu'une pompe haute pression (15), en aval, et l'échangeur de refroidissement (14) communique avec une installation d'alimentation (20) en agent de refroidissement, de préférence une installation d'alimentation en azote liquide.

7. Dispositif selon la revendication 6, caractérisé en ce que la conduite haute pression (18) comporte, entre la pompe haute pression (15) et la buse (10), une enveloppe de refroidissement (24) de préférence avec de l'azote liquide.

8. Dispositif selon la revendication 6 ou 7, caractérisé en ce que la buse (10) se trouve dans un chalumeau (19) dont l'alésage pour l'oxygène liquide est entouré par une chemise de refroidissement (29) pour de l'azote liquide qui est elle-même entourée d'une isolation (30) et d'un refroidissement par eau (31).

9. Dispositif selon l'une des revendications 6 à 8, caractérisé en ce que le radiateur de refroidissement (14), la pompe haute pression (15) et le chalumeau (19) sont montés sur un châssis commun, de préférence réglable en hauteur sur un chariot transversal d'une machine à découper à portique.
